# DEMANDE DE BREVET EUROPEEN

(11) **EP 4 745 632 A1**
(43) Date de publication de la demande: **20.05.2026**
(21) Numéro de dépôt: 25208649.1
(22) Date de dépôt: 14.10.2025
(51) Int. Cl.: G02B 5/08, F24S 40/55

(54) **STRUCTURE MULTICOUCHE POUR LE REFROIDISSEMENT RADIATIF PASSIF**

(30) Priorité: 15.11.2024 FR 2412500
(71) Demandeur: Viessmann Holding International GmbH, 35108 Allendorf (Eder) (DE); Université de Poitiers, 86000 Poitiers (FR); Université de Lorraine, 54000 Nancy (FR); Centre National de la Recherche Scientifique, 75016 Paris (FR)
(72) Inventeur: PORTHA, Nicolas, 57385 Tritteling-Redlach (FR); CAPON, Fabien, 54290 Bayon (FR); DREVILLON, Jérémie, 86180 Buxerolles (FR); TAUSCH, Arthur, 54000 Nancy (FR)
(74) Mandataire: Ipsilon

(57) **Abrégé**

L'invention concerne une structure multicouche (1) pour le refroidissement radiatif passif, comprenant :
- une couche réfléchissante (2) de base en argent ou en aluminium,
- un empilement (3) déposé sur la couche réfléchissante et comprenant au moins deux et au plus cinq couches émissives (4, 5, 6) superposées les unes aux autres, chaque couche émissive étant continue et d'épaisseur uniforme, au moins une des couches émissives (4) étant en dioxyde d'hafnium, au moins une autre des couches émissives (5, 6) étant en un oxyde, autre que le dioxyde d'hafnium, en un nitrure ou en un oxynitrure,
la structure multicouche ayant une épaisseur comprise entre 0,5 et 2 µm.

## Description

### Domaine technique

La présente invention concerne le domaine des structures pour le refroidissement radiatif passif.

### Technique antérieure

Une structure pour le refroidissement radiatif passif utilise le phénomène physique du rayonnement thermique durant lequel un rayonnement électromagnétique est émis spontanément en fonction de la température du corps émetteur refroidissant alors ledit corps passivement. Ainsi, les structures pour le refroidissement radiatif passif sont particulièrement intéressantes en ce qu'elles ne nécessitent pas d'apport énergétique pour le refroidissement.

Les structures pour le refroidissement radiatif passif peuvent être sous la forme de revêtements réfléchissants les longueurs d'onde comprises entre 0,3 et 2,5 µm, correspondant au rayonnement solaire, et fortement émetteurs par rayonnement thermique dans les longueurs d'onde comprises entre 8 et 13 µm et entre 15 et 18 µm, correspondant aux deux fenêtres de transparence de l'atmosphère, afin d'évacuer l'énergie thermique à température ambiante.

Les longueurs d'ondes situées en dessous de 8 µm et dans une gamme allant jusqu'à 4 µm seront concernées pour le refroidissement radiatif d'installations ou d'objets que l'on souhaite refroidir à une température située au-dessus de la température ambiante. De telles structures permettent ainsi de limiter au mieux l'échauffement causé par le rayonnement solaire tout en se refroidissant par émission thermique. La plage de longueurs d'onde de l'émission thermique correspondant aux fenêtres atmosphérique, l'énergie thermique est ainsi dissipée directement dans l'espace lorsque la structure est utilisée en extérieur.

Par exemple, l'article de Raman et al. [1] décrit une structure pour le refroidissement radiatif passif comprenant au moins une couche réfléchissante métallique et une multitude de couches à fort pouvoir d'émission IR pour un refroidissement à l'ambiante. Toutefois, bien que ladite structure présente de bonnes performances pour le refroidissement radiatif, elle n'est pas adaptée pour une production à l'échelle industrielle du fait de son coût et de sa complexité. Notamment, ladite structure est difficilement productible pour de grandes surfaces.

Le brevet US 11,543,157 B2 décrit un dispositif de refroidissement radiatif comprenant une couche réfléchissante et une couche émissive disposée sur la couche réfléchissante, la couche émissive comprenant une première couche avec un motif irrégulier et une seconde couche, disposée sur la première couche, ayant un indice de réfraction différent de celui de la première couche, contraste d'indice permettant d'optimiser l'émission de chaleur par rayonnement de la structure.

Les demandes de brevet EP 3956614 A et US 2022/0307730 A1 décrivent chacune un dispositif de refroidissement par rayonnement pour une utilisation sous exposition solaire directe.

Les demandes de brevet EP 3837479 A1 et EP 3732514 A1 décrivent chacune un refroidisseur passif comprenant une couche en polymère pour le refroidissement radiatif. Cependant, ces refroidisseurs passifs ne semblent pas adaptés pour une utilisation sous exposition solaire car lesdites couches en polymère se dégradent sous un rayonnement solaire.

Il existe un besoin pour une structure peu onéreuse, de fabrication simple, rapide et adaptée pour une production à l'échelle industrielle, présentant de bonnes performances pour le refroidissement radiatif passif, et, avantageusement également adaptée pour une exposition solaire.

Le but de l'invention est de répondre au moins en partie à ce besoin.

### Exposé de l'invention

Pour ce faire, l'invention concerne une structure multicouche pour le refroidissement radiatif passif, comprenant :
- une couche réfléchissante de base en argent ou en aluminium,
- un empilement déposé sur la couche réfléchissante et comprenant au moins deux et au plus cinq couches émissives superposées les unes aux autres, chaque couche émissive étant continue et d'épaisseur uniforme, au moins une des couches émissives étant en dioxyde d'hafnium, au moins une autre des couches émissives étant en un oxyde, autre que le dioxyde d'hafnium, en un nitrure ou en un oxynitrure,
la structure multicouche ayant une épaisseur comprise entre 0,5 et 2 µm et au moins une autre des couches émissives étant en nitrure de silicium.

Une couche réfléchissante en argent ou en aluminium permet de réfléchir les rayonnements lumineux dont la longueur d'onde est comprise entre 0,3 et 2,5 µm, notamment lorsque la température supérieure à la température ambiante.

Les inventeurs ont constaté qu'un empilement, comprenant au moins une couche émissive en dioxyde d'hafnium et au moins une autre couche émissive en un oxyde, autre que le dioxyde d'hafnium, en un nitrure ou en un oxynitrure, présente une bonne émissivité pour des rayonnements optiques de longueur d'onde comprise entre 8 et 20 µm.

La structure multicouche selon la présente invention, intégrant un tel empilement, présente ainsi de bonnes performances pour le refroidissement radiatif passif d'installation ou d'objet à température ambiante, ou, à température inférieure à la température ambiante.

En outre, l'empilement de la structure multicouche selon la présente invention ne nécessite ni un grand nombre de couches émissives ni une grande épaisseur pour être performant. Avantageusement, l'empilement est ainsi peu onéreux et simple et rapide à fabriquer. Il en est alors de même pour la structure multicouche selon la présente invention.

De préférence, la ou les couches émissives, autres que celle(s) en dioxyde d'hafnium et en nitrure de silicium, sont en dioxyde de silicium, en dioxyde de titane, en alumine, en nitrure de bore, ou en nitrure d'aluminium.

De préférence, au moins une des couches émissives est en dioxyde de silicium. De préférence, la couche émissive en dioxyde de silicium est en contact avec la couche émissive en dioxyde d'hafnium.

De préférence, la couche émissive la plus éloignée de la couche réflective est en dioxyde d'hafnium.

De préférence, la couche émissive la plus proche de la couche réflective est en dioxyde d'hafnium.

De préférence, chaque couche émissive présente une épaisseur comprise entre 10 et 5000 nm.

De préférence, la ou les couches émissives en dioxyde d'hafnium présentent une épaisseur comprise entre 10 et 5000 nm.

De préférence, la ou les couches émissives en dioxyde de silicium présentent une épaisseur comprise entre 10 et 5000 nm.

De préférence, la ou les couches émissives en nitrure de silicium présentent une épaisseur comprise entre 10 et 5000 nm.

De préférence, l'empilement présente une épaisseur totale comprise entre 0,5 et 5 µm.

De préférence, l'empilement est constitué uniquement des couches émissives.

De préférence, la couche réfléchissante présente une épaisseur comprise entre 0,150 et 1 µm.

De préférence, la structure s'étend sur une surface d'aire supérieure à 1 m² lorsqu'observée selon la direction d'empilement des couches radiatives.

L'invention a également pour objet un panneau solaire à refroidissement radiatif comprenant au moins une structure multicouche selon la présente invention, ledit panneau solaire étant destiné à être intégré dans un objet choisi parmi un toit d'un bâtiment, une carrosserie d'un véhicule, un conteneur de transport de marchandise, un réservoir de fluide.

L'invention concerne également un procédé de fabrication d'une structure multicouche selon la présente invention, le procédé comprenant la formation de l'empilement de couches émissives superposées par une succession de dépôts physiques en phase vapeur, de préférence au moins un des dépôts physiques en phase vapeur est une pulvérisation cathodique.

De préférence, la couche réfléchissante est formée, préalablement à l'empilement de couches émissives, par dépôt physique en phase vapeur, de préférence par pulvérisation cathodique

D'autres avantages et caractéristiques ressortiront mieux à la lecture de la description détaillée, faite à titre illustratif et non limitatif, en référence aux figures suivantes.

### Brève description des dessins

[Fig 1] La figure 1 est une représentation schématique en perspective d'un premier mode de réalisation d'une structure multicouche selon la présente invention ;
[Fig 2] La figure 2 est un graphique représentant l'évolution du bilan radiatif de la structure multicouche illustrée à la figure 1 en fonction l'épaisseur de l'empilement de ladite structure multicouche ;
[Fig 3] La figure 3 est un graphique représentant l'évolution de l'émissivité de la structure multicouche illustrée à la figure 1 en fonction de la longueur d'onde ;
[Fig 4] La figure 4 est une représentation schématique en perspective d'un deuxième mode de réalisation d'une structure multicouche selon la présente invention ;
[Fig 5] La figure 5 est un graphique représentant l'évolution du bilan radiatif de la structure multicouche illustrée à la figure 4 en fonction l'épaisseur de l'empilement de ladite structure multicouche ;
[Fig 6] La figure 6 est un graphique représentant l'évolution de l'émissivité de la structure multicouche illustrée à la figure 4 en fonction de la longueur d'onde ;
[Fig 7] La figure 7 est une représentation schématique en perspective d'un troisième mode de réalisation d'une structure multicouche selon la présente invention ;
[Fig 8] La figure 8 est un graphique représentant l'évolution du bilan radiatif de la structure multicouche illustrée à la figure 7 en fonction l'épaisseur de l'empilement de ladite structure multicouche ;
[Fig 9] La figure 9 est un graphique représentant l'évolution de l'émissivité de la structure multicouche illustrée à la figure 7 en fonction de la longueur d'onde.

### Description détaillée

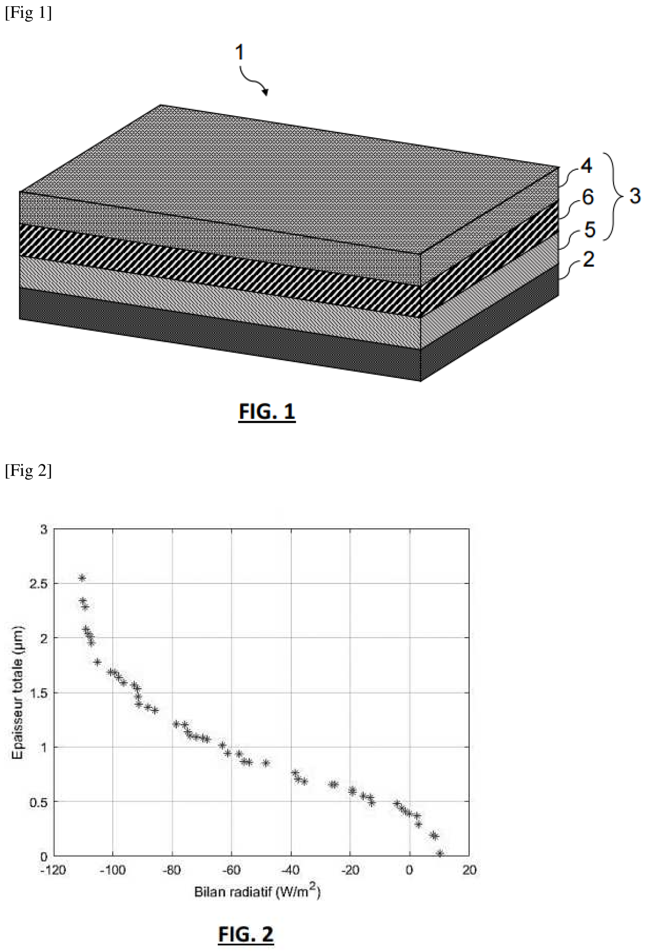

Dans les figures 1, 4 et 7 les différents éléments de la structure multicouche selon l'invention ne sont pas représentés à l'échelle, par souci de clarté du dessin.

On a illustré aux figures 1, 4 et 7 différents modes de réalisation d'une structure multicouche 1 selon la présente invention. Dans chacun de ces modes de réalisation, la structure multicouche 1 comprend une couche réfléchissante 2 en argent et un empilement 3 déposé directement sur la couche réfléchissante 2.

La couche réfléchissante 2 présente une épaisseur constante et égale à 150 nm.

L'empilement 3 est constitué de plusieurs couches émissives 4, 5 et 6. Au moins une des couches émissives est en dioxyde d'hafnium (HfO₂), ladite ou lesdites couches émissives sont désignées ci-après par couche émissive 4 en HfO₂. Au moins une autre des couches émissives est en nitrure de silicium (Si₃N₄), ladite ou lesdites couche émissive sont désignées ci-après par couche émissive 5 en Si₃N₄. Au moins une autre des couches émissives est en dioxyde de silicium (SiO₂), ladite ou lesdites couche émissive sont désignées ci-après par couche émissive 6 en SiO₂.

Chacune des couches émissives 4, 5 et 6 de l'empilement 3 présente une épaisseur constante sur l'ensemble de la surface de la structure multicouche 1.

La ou les couches émissives 4 en HfO₂ présentent un indice de réfraction dont la partie réelle n est sensiblement égale à 2 dans le visible, et dont la partie imaginaire k est supérieure à 0 pour les longueurs d'onde comprises entre 15 et 20 µm.

La ou les couches émissives 5 en Si₃N₄ présentent un indice de réfraction dont la partie réelle n est sensiblement égale à 2 dans le visible, et dont la partie imaginaire k est supérieure à 0 pour les longueurs d'onde comprises entre 8 et 14 µm.

La ou les couches émissives 6 en SiO₂ présentent un indice de réfraction dont la partie réelle n est sensiblement égale à 1,5 dans le visible, et dont la partie imaginaire k est supérieure à 0 pour les longueurs d'onde comprises entre 8 et 10 µm.

Dans le cadre de l'invention, les indices de réfraction indiqués sont mesurés dans des conditions normales de pression et de température, c'est-à-dire pour à une pression comprise entre 0.9 et 1.1 bar et une température comprise entre 0 et 50 °C.

Ainsi, l'empilement 3 comprend une pluralité de couches émissives 4, 5 et 6 présentant des indices de réfraction dont les parties réelles n diffèrent dans le visible. Avantageusement, cela permet de maximiser la réflexion des rayonnements lumineux dans le visible, et donc des rayonnements lumineux solaires.

Les couches émissives 4, 5 et 6 de l'empilement 3 présentent également des indices de réfraction dont les parties imaginaires k évoluent différemment les unes des autres. Notamment, lesdites parties imaginaires k sont supérieures à 0 pour différentes plages de longueurs d'onde dans les fenêtres de transparence de l'atmosphère. Cela permet de maximiser l'absorption de l'empilement 3 dans les plages de longueurs d'onde comprises par les fenêtres de transparence de l'atmosphère. Avantageusement, cela permet donc d'augmenter l'étendu de la plage de longueurs d'onde de l'émission thermique de l'empilement 3 sur l'ensemble des fenêtres de transparence de l'atmosphère.

Dans le premier mode de réalisation, illustré par la figure 1, l'empilement 3 comprend une unique couche émissive 4 en HfO₂, une unique couche émissive 5 en Si₃N₄, et, une unique couche émissive 6 en SiO₂.

La couche émissive 4 en HfO₂ est la couche émissive la plus éloignée de la couche réfléchissante 2. Notamment, la couche émissive 4 en HfO₂ constitue la surface externe de l'empilement 3.

La couche émissive 5 en Si₃N₄ est la couche émissive la plus proche de la couche réfléchissante 2. Notamment, la couche émissive 5 en Si₃N₄ est en contact avec la couche réfléchissante 2.

La couche émissive 6 en SiO₂ est intercalée entre la couche émissive 4 en HfO₂ et la couche émissive 5 en Si₃N₄. Notamment, la couche émissive 6 en SiO₂ est en contact avec la couche émissive 4 en HfO₂ et avec la couche émissive 5 en Si₃N₄.

Les inventeurs ont simulé le bilan radiatif de la structure multicouche 1, selon ce premier mode de réalisation, pour différentes épaisseurs de l'empilement 3. Le bilan radiatif est la différence entre la puissance par unité de surface reçue par la structure multicouche 1 et la puissance par unité de surface émise par la structure multicouche 1.

On a illustré à la figure 2 l'évolution, obtenue par cette simulation, du bilan radiatif de la structure multicouche 1, selon le premier mode de réalisation, en fonction de l'épaisseur de l'empilement 3. La structure multicouche 1 présente un bilan radiatif satisfaisant pour des épaisseurs d'empilement 3 assez faibles. Notamment, pour le bilan radiatif varie entre -18 W/m² et -107 W/m² pour une épaisseur d'empilement 3 variant entre 0,5 et 2 µm. Ainsi, la structure multicouche 1 présente de bonnes performances pour le refroidissement radiatif passif tout en ne nécessitant pas un empilement 3 d'épaisseur conséquente.

Les inventeurs ont simulé le comportement des propriétés optiques de la structure multicouche 1 selon le premier mode de réalisation. Pour cette simulation, l'épaisseur de la couche émissive 4 en HfO₂ est égale à 79 nm, l'épaisseur de la couche émissive 5 en Si₃N₄ est égale à 1176 nm et l'épaisseur de la couche émissive 6 en SiO₂ est égale à 80 nm.

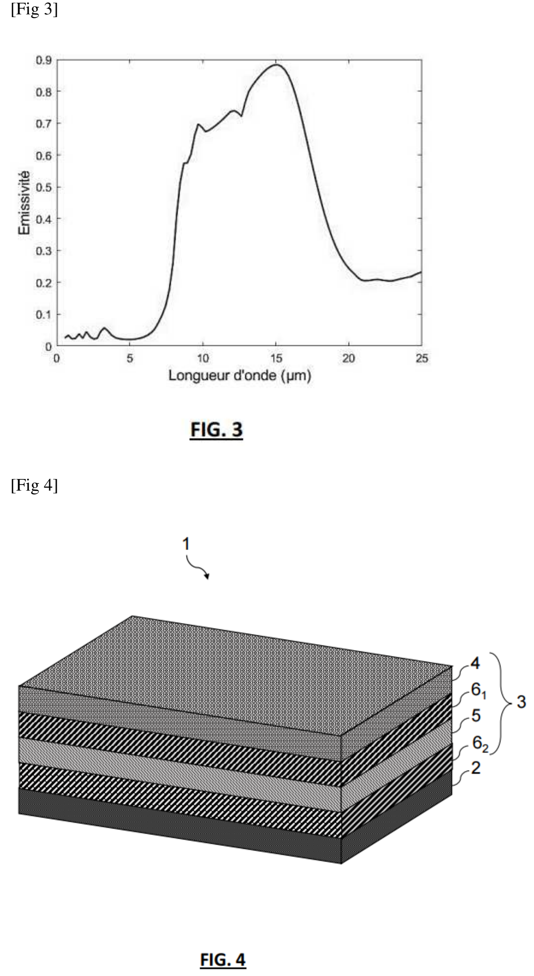

On a illustré à la figure 3 l'évolution, obtenue par cette simulation, de l'émissivité de la structure multicouche 1 selon la figure 1 en fonction de la longueur d'onde. La structure multicouche 1 présente une forte émissivité pour des rayonnements optiques de longueur d'onde comprise entre 8 µm et 20 µm. Notamment, la structure multicouche 1 présente une émissivité comprise entre 0,7 et 0,9 pour des rayonnements optiques de longueur d'onde comprise entre 10 et 16 µm. Ainsi, la structure multicouche 1 est particulièrement adaptée pour le refroidissement radiatif passif d'installation ou d'objet à température ambiante, ou, à température inférieure à la température ambiante.

Dans le deuxième mode de réalisation, illustré par la figure 4, l'empilement 3 comprend une unique couche émissive 4 en HfO₂, une unique couche émissive 5 en Si₃N₄, et, deux couches émissives 6₁ et 6₂ en SiO₂.

La couche émissive 4 en HfO₂ est la couche émissive la plus éloignée de la couche réfléchissante 2. Notamment, la couche émissive 4 en HfO₂ constitue la surface externe de l'empilement 3.

La couche émissive 5 en Si₃N₄ est intercalée entre les deux couches émissives 6₁ et 6₂ en SiO₂. Notamment, la couche émissive 5 en Si₃N₄ est en contact avec chacune des couches émissives 6₁ et 6₂ en SiO₂.

Une des couches émissives 6₁ en SiO₂, dite première couche émissive 6₁ en SiO₂, est intercalée entre la couche émissive 4 en HfO₂ et la couche émissive 5 en Si₃N₄. Notamment, la première couche émissive 6₁ en SiO₂ est en contact avec la couche émissive 4 en HfO₂ et avec la couche émissive 5 en Si₃N₄.

L'autre des couches émissives 6₂ en SiO₂, dite deuxième couche émissive 6₂ en SiO₂, est la couche émissive la plus proche de la couche réfléchissante 2. Notamment, la deuxième couche émissive 6₂ en SiO₂ est en contact avec la couche réfléchissante 2.

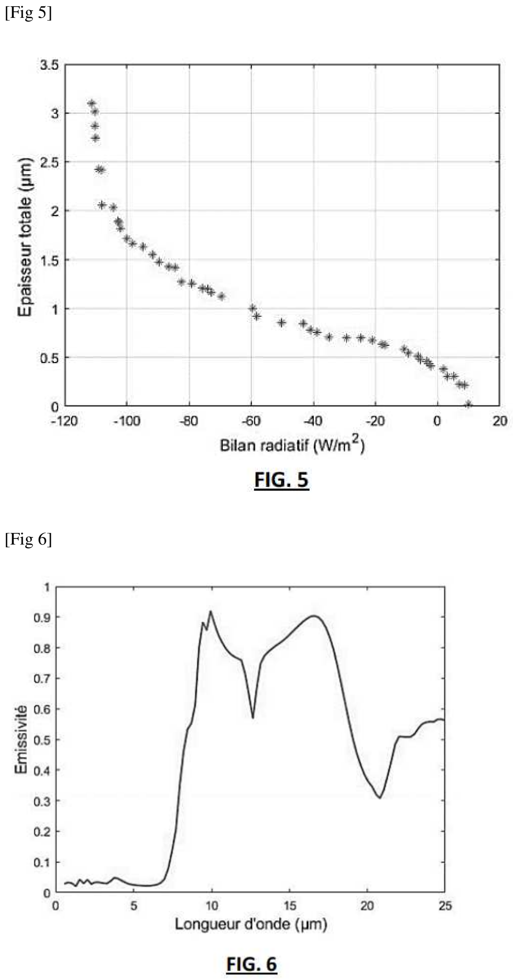

Les inventeurs ont simulé le bilan radiatif de la structure multicouche 1, selon ce deuxième mode de réalisation, pour différentes épaisseurs de l'empilement 3. On a illustré à la figure 5 l'évolution, obtenue par cette simulation, du bilan radiatif de la structure multicouche 1, selon le deuxième mode de réalisation, en fonction de l'épaisseur de l'empilement 3. La structure multicouche 1 présente un bilan radiatif satisfaisant pour des épaisseurs d'empilement 3 assez faibles. Notamment, pour le bilan radiatif varie entre -10 W/m² et - 105 W/m² pour une épaisseur d'empilement 3 variant entre 0,5 et 2 µm. Ainsi, la structure multicouche 1 présente de bonnes performances pour le refroidissement radiatif passif tout en ne nécessitant pas un empilement 3 d'épaisseur conséquente.

Les inventeurs ont simulé le comportement des propriétés optiques de la structure multicouche 1 selon le deuxième mode de réalisation. Pour cette simulation, l'épaisseur de la couche émissive 4 en HfO₂ est égale à 54 nm, l'épaisseur de la couche émissive 5 en Si₃N₄ est égale à 1355 nm, l'épaisseur de la première couche émissive 6₁ en SiO₂ est égale à 369 nm, et, l'épaisseur de la deuxième couche émissive 6₂ en SiO₂ est égale à 99 nm.

On a illustré à la figure 6 l'évolution, obtenue par cette simulation, de l'émissivité de la structure multicouche 1 selon la figure 4 en fonction de la longueur d'onde. La structure multicouche 1 présente une forte émissivité pour des rayonnements optiques de longueur d'onde comprise entre 8 µm et 20 µm. Notamment, la structure multicouche 1 présente une émissivité proche de 0,9 pour des rayonnements optiques de longueur d'onde proche de 10 µm et pour des rayonnements optiques de longueur d'onde comprise entre 15 et 18 µm. Ainsi, la structure multicouche 1 est particulièrement adaptée pour le refroidissement radiatif passif d'installation ou d'objet à température ambiante, ou, à température inférieure à la température ambiante.

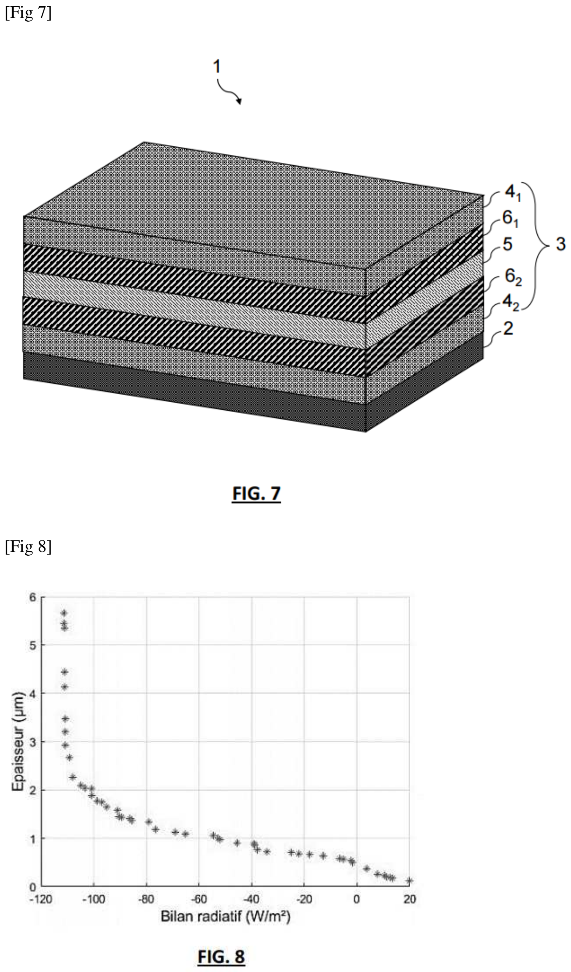

Dans le troisième mode de réalisation, illustré par la figure 7, l'empilement 3 comprend deux couches émissives 4₁ et 4₂ en HfO₂, une unique couche émissive 5 en Si₃N₄, et, deux couches émissives 6₁ et 6₂ en SiO₂.

Une des couches émissives 4₁ en HfO₂, dite première couche émissive 4₁ en HfO₂, est la couche émissive la plus éloignée de la couche réfléchissante 2. Notamment, la première couche émissive 4₁ en HfO₂ constitue la surface externe de l'empilement 3.

L'autre des couches émissives 4₂ en HfO₂, dite deuxième couche émissive 4₂ en HfO₂, est la couche émissive la plus proche de la couche réfléchissante 2. Notamment, la deuxième couche émissive 4₂ en HfO₂ est en contact avec la couche réfléchissante 2.

La couche émissive 5 en Si₃N₄ est intercalée entre les deux couches émissives 6₁ et 6₂ en SiO₂. Notamment, la couche émissive 5 en Si₃N₄ est en contact avec chacune des couches émissives 6₁ et 6₂ en SiO₂.

Une des couches émissives 6₁ en SiO₂, dite première couche émissive 6₁ en SiO₂, est intercalée entre la première couche émissive 4₁ en HfO₂ et la couche émissive 5 en Si₃N₄. Notamment, la première couche émissive 6₁ en SiO₂ est en contact avec la première couche émissive 4₁ en HfO₂ et avec la couche émissive 5 en Si₃N₄.

L'autre des couches émissives 6₂ en SiO₂, dite deuxième couche émissive 6₂ en SiO₂, est intercalée entre la deuxième couche émissive 4₂ en HfO₂ et la couche émissive 5 en Si₃N₄. Notamment, la deuxième couche émissive 6₂ en SiO₂ est en contact avec la deuxième couche émissive 4₂ en HfO₂ et avec la couche émissive 5 en Si₃N₄.

Les inventeurs ont simulé le bilan radiatif de la structure multicouche 1, selon ce troisième mode de réalisation, pour différentes épaisseurs de l'empilement 3. On a illustré à la figure 8 l'évolution, obtenue par cette simulation, du bilan radiatif de la structure multicouche 1, selon le troisième mode de réalisation, en fonction de l'épaisseur de l'empilement 3. La structure multicouche 1 présente un bilan radiatif satisfaisant pour des épaisseurs d'empilement 3 assez faibles. Notamment, pour le bilan radiatif varie entre 0 et 250 W/m² pour une température comprise entre 0 et 50 °C et une épaisseur d'empilement 3 variant entre 0,5 et 2 µm. Ainsi, la structure multicouche 1 présente de bonnes performances pour le refroidissement radiatif passif tout en ne nécessitant pas un empilement 3 d'épaisseur conséquente.

Les inventeurs ont simulé le comportement des propriétés optiques de la structure multicouche 1 selon le troisième mode de réalisation. Pour cette simulation, l'épaisseur de la première couche émissive 4₁ en HfO₂ est égale à 62 nm, l'épaisseur de la deuxième couche émissive 4₂ en HfO₂ est égale à 106 nm, l'épaisseur de la couche émissive 5 en Si₃N₄ est égale à 1098 nm, l'épaisseur de la première couche émissive 6₁ en SiO₂ est égale à 298 nm, et, l'épaisseur de la deuxième couche émissive 6₂ en SiO₂ est égale à 12 nm.

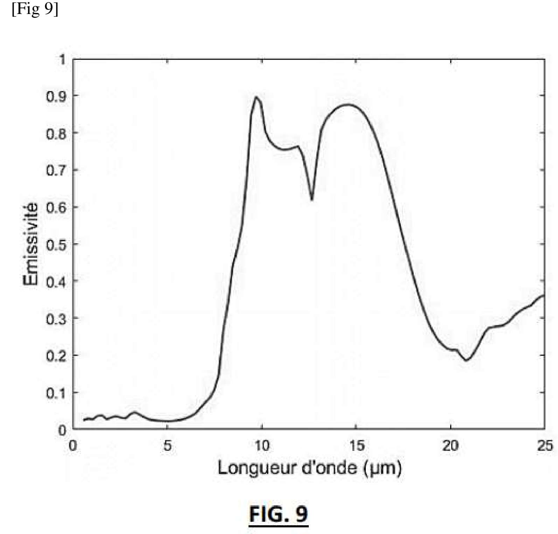

On a illustré à la figure 9 l'évolution, obtenue par cette simulation, de l'émissivité de la structure multicouche 1 selon la figure 7 en fonction de la longueur d'onde. La structure multicouche 1 présente une forte émissivité pour des rayonnements optiques de longueur d'onde comprise entre 8 µm et 20 µm. Notamment, la structure multicouche 1 présente une émissivité proche de 0,9 pour des rayonnements optiques de longueur d'onde proche de 10 µm et pour des rayonnements optiques de longueur d'onde comprise entre 14 et 16 µm. Ainsi, la structure multicouche 1 est particulièrement adaptée pour le refroidissement radiatif passif d'installation ou d'objet à température ambiante, ou, à température inférieure à la température ambiante.

D'autres variantes et améliorations peuvent être envisagées sans pour autant sortir du cadre de l'invention tel que défini par les revendications ci-après.

### Liste des documents cités

[1] Raman, A., Anoma, M., Zhu, L. et al. : "Passive radiative cooling below ambient air temperature under direct sunlight", Nature 515, 540-544 (2014).

## Revendications

1. Structure multicouche (1) pour le refroidissement radiatif passif, comprenant :
- une couche réfléchissante (2) de base en argent ou en aluminium,
- un empilement (3) déposé sur la couche réfléchissante et comprenant au moins deux et au plus cinq couches émissives (4, 5, 6) superposées les unes aux autres, chaque couche émissive étant continue et d'épaisseur uniforme, au moins une des couches émissives (4) étant en dioxyde d'hafnium, au moins une autre des couches émissives (5, 6) étant en un oxyde, autre que le dioxyde d'hafnium, en un nitrure ou en un oxynitrure,
la structure multicouche (1) ayant une épaisseur comprise entre 0,5 et 2 µm,
structure multicouche (1) **caractérisée en ce qu'**au moins une autre des couches émissives (5,6) est en nitrure de silicium.

2. Structure multicouche selon la revendication 1, **caractérisée en ce que** la ou les couches émissives (6), autre(s) que celles en dioxyde d'hafnium et en nitrure de silicium (4, 5), sont en dioxyde de silicium, en dioxyde de titane, en alumine, en nitrure de bore, ou en nitrure d'aluminium.

3. Structure multicouche selon la revendication 2, **caractérisée en ce que** au moins une des couches émissives est en dioxyde de silicium (6).

4. Structure multicouche selon la revendication 3, **caractérisée en ce que** la couche émissive en dioxyde de silicium est en contact avec la couche émissive en dioxyde d'hafnium.

5. Structure multicouche selon l'une des revendications précédentes, **caractérisée en ce que** la couche émissive la plus éloignée de la couche réflective est en dioxyde d'hafnium.

6. Structure multicouche selon l'une des revendications précédentes, **caractérisée en ce que** la couche émissive la plus proche de la couche réflective étant en dioxyde d'hafnium.

7. Structure multicouche selon l'une des revendications précédentes, **caractérisée en ce que** chaque couche émissive présente une épaisseur comprise entre 10 et 5000 nm.

8. Structure multicouche selon l'une des revendications précédentes, **caractérisée en ce que** l'empilement (3) présente une épaisseur totale comprise entre 0,5 et 5 µm.

9. Structure multicouche selon l'une des revendications précédentes, **caractérisée en ce que** l'empilement (3) est constitué uniquement des couches émissives.

10. Structure multicouche selon l'une des revendications précédentes, en ce que la couche réfléchissante (2) présente une épaisseur comprise entre 0,150 et 1 µm.

11. Structure multicouche selon l'une des revendications précédentes, **caractérisée en ce qu'**elle s'étend sur une surface d'aire supérieure à 1 m² lorsqu'observée selon la direction d'empilement des couches radiatives.

12. Panneau solaire à refroidissement radiatif comprenant au moins une structure multicouche (1) selon l'une quelconque des revendications 1 à 11, ledit panneau solaire étant destiné à être intégré dans un objet choisi parmi un toit d'un bâtiment, une carrosserie d'un véhicule, un conteneur de transport de marchandise, un réservoir de fluide.

13. Procédé de fabrication d'une structure multicouche (1) selon l'une quelconque des revendications 1 à 11, le procédé comprenant la formation d'un empilement (3) de couches émissives superposées (4, 5, 6) par une succession de dépôts physiques en phase vapeur, de préférence au moins un des dépôts physiques en phase vapeur étant une pulvérisation cathodique.

14. Procédé selon la revendication précédente, **caractérisé en ce que** la couche réfléchissante (2) est formée, préalablement à l'empilement (3) de couches émissives, par dépôt physique en phase vapeur, de préférence par pulvérisation cathodique.
